# EUROPÄISCHE PATENTSCHRIFT

(11) **EP 4 402 059 B1**
(45) Veröffentlichungstag und Bekanntmachung des Hinweises auf die Patenterteilung: **05.08.2026**
(21) Anmeldenummer: 22803168.8
(22) Anmeldetag: 15.09.2022
(51) Int. Cl.: B64F 1/32, B64U 70/97

(54) **LANDEPLATTFORM**
LANDING PLATFORM
PLATEFORME D'ATTERRISSAGE

(30) Priorität: 16.09.2021 DE 102021123990
(43) Veröffentlichungstag der Anmeldung: 24.07.2024
(73) Patentinhaber: HHLA Sky GmbH, 20457 Hamburg (DE)
(72) Erfinder: HILBIG, Olaf, 32278 Kirchlengern (DE); OLUSCHINSKY, Stefan, 32278 Kirchlengern (DE); GRONSTEDT, Matthias, 20457 Hamburg (DE); SCHRÖDER, Marius, 33659 Bielefeld (DE)
(74) Vertreter: Königer, Karsten
(86) Internationale Anmeldenummer: PCT/EP2022/075714
(87) Internationale Veröffentlichungsnummer: WO 2023/041679

(56) Entgegenhaltungen:
- WO-A1-2019/232753
- CN-A- 112 079 065
- US-A1- 2021 214 102

## Beschreibung

Gegenstand der Erfindung ist Landeplattform für eine Drohne.

Transportdrohnen in Form von Multikoptern und Drohnen, welche autonom oder ferngesteuert von einem Startpunkt zu einem Zielpunkt fliegen können, sind bekannt. Ebenfalls bekannt sind Vorrichtungen zur Entgegennahme von Sendungen, die von einer Drohne transportiert wurden.

WO 2019/232753 A1 zeigt eine Landeplattform, bei der die Position einer Drohne nach ihrer Landung durch Förderbänder verändert werden kann. CN 122 079 065 A zeigt eine Vorrichtung zum Beladen von Drohnen.

Aufgabe der Erfindung ist es, eine Landeplattform für eine Drohne zur Verfügung zu stellen, die es ermöglicht, dass die Drohne Transportgut wie ein Paket aufnehmen kann.

Die Aufgabe wird gelöst durch eine Landeplattform gemäß Patentanspruch 1. Weitere vorteilhafte Ausführungsformen sind Gegenstand der Unteransprüche oder nachfolgend beschrieben.

Die erfindungsgemäße Landeplattform ermöglicht es in vorteilhafter Weise, dass eine Drohne nach ihrer Landung auf der Landefläche automatisch in eine Position befördert wird, in der die Drohne Transportgut aufnehmen, beispielsweise ergreifen, kann. Dabei kann die Drohne nicht nur autonom fliegen und landen, sondern vorzugsweise auch die Landeplattform steuern, um von den Förderbändern und Schiebeleisten in die geeignete Position bewegt zu werden und von der Hubvorrichtung ein Transportgut zur Aufnahme bereitgestellt zu erhalten.

Vorzugsweise sind die Drohnen-Förderbänder als Modultransportbänder ausgebildet. Vorzugsweise sind die Einzelelemente der Modulförderbänder zumindest teilweise offen, so dass Feuchtigkeit ablaufen kann.

Vorzugsweise sind die Landefläche, die Schiebeleisten und die Bestückungseinheit an einem Rahmengestell angebracht.

Vorzugsweise werden die Drohnen-Förderbänder über einen Elektromotor angetrieben.

Vorzugsweise können die Schiebeleisten eine Drohne so verschieben, dass die Drohne gleichzeitig mit beiden Drohnen-Förderbändern Kontakt hat. Vorzugsweise können von einem Landgestell der Drohne umfasste Kufen durch die Schiebeleisten in eine Position parallel zu der Laufrichtung der Drohnen-Förderbänder bewegt werden. Vorzugsweise werden die Schiebeleisten über einen Kettentrieb angetrieben werden. Vorzugsweise sind die Schiebeleisten aus profiliertem Edelstahl. Vorzugsweise können die Schiebeleisten, wenn sie sich voneinander weg bewegen, auf der Landefläche befindliche Fremdteile wie beispielsweise kleine Äste oder Laub nach außen von der Landefläche herunterschieben. Vorzugsweise werden die beiden Endlagen einer Schiebeleiste ("außen" bzw. "innen") mechanisch begrenzt. Vorzugsweise werden die beiden Endlagen der Schiebeleisten ("außen" bzw. "innen") sensorisch abgefragt.

Vorzugsweise wird bei der Bewegung der Drohne in die Beladeposition ein Landegestell der Drohne an einer Anschlagskante ausgerichtet. Vorzugsweise werden bei der Bewegung der Drohne in die Beladeposition Kufen eines Landegestells der Drohne unter zwei Niederhaltelaschen bewegt. Vorzugsweise wird das Erreichen der Beladeposition durch Sensorik abgefragt. Vorzugweise halten Niederhaltelaschen ein Landegestell der Drohne, während die Drohne auf der Hubvorrichtung angeordnetes Transportgut aufnimmt.

Die Hubvorrichtung ist als Scherenhubtisch ausgeführt. Der Scherenhubtisch kann über einen selbsthemmenden Spindelantrieb in der Höhe verstellt werden. Vorzugsweise werden die Endlagen der Hubvorrichtung über Sensoren erfasst. Vorzugsweise sind die Endlagen der Hubvorrichtung mit Sicherheitsanschlägen gegen Beschädigungen gesichert. Vorzugsweise erfolgt der Antrieb der Hubvorrichtung über einen Elektromotor und ein angeflanschtes Getriebe. Vorzugsweise ist die Landefläche mindestens 1,8 m mal 1,8 m groß. Diese Größe ermöglicht es, dass die Drohne, auch dann sicher auf der Landefläche landen kann, wenn die Drohne wegen äußerer Bedingungen oder wegen Ungenauigkeiten in der Steuerung oder Ortung punktgenauere Landungen nicht gewährleistet sind.

Die Erfindung wird anhand der Figuren, die ein Ausführungsbeispiel zeigen, näher erläutert. Es zeigen:
- Fig. 1:: eine erfindungsgemäße Landeplattform mit Drohne und Transportgut;
- Fig. 2:: eine Seitenansicht einer erfindungsgemäßen Landeplattform mit Transportgut;
- Fig. 3:: eine Seitenansicht einer erfindungsgemäßen Landeplattform mit Drohne und Transportgut;
- Fig. 4:: eine erfindungsgemäße Landeplattform mit Drohne und Transportgut;

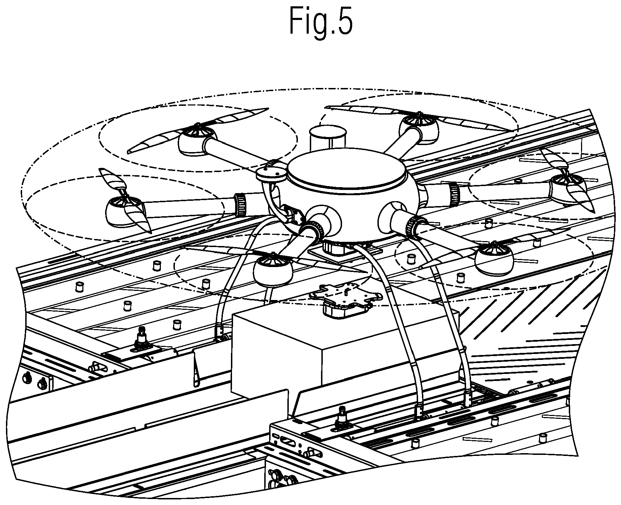

- Fig. 5:: eine erfindungsgemäße Landeplattform mit Drohne und nicht aufgenommenem Transportgut;

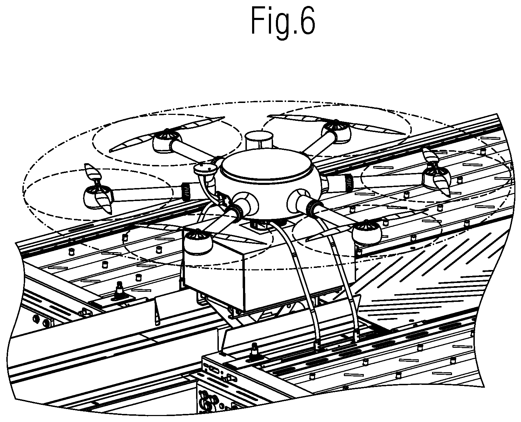

- Fig. 6:: eine erfindungsgemäße Landeplattform mit Drohne mit aufgenommenem Transportgut.

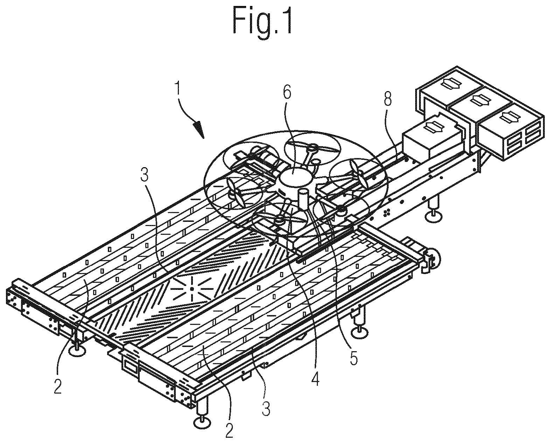

Figur 1 zeigt eine Landeplattform 1 umfassend eine Landefläche, die zwei in derselben horizontalen Ebene parallel angeordnete Förderbänder 2 umfasst, die so beabstandet sind, dass eine auf der Landefläche stehende Drohne 6 gleichzeitig mit beiden Förderbändern 2 Kontakt haben kann (Drohnen-Förderbänder 2), und zwei Schiebeleisten 3 , die jeweils parallel zur Laufrichtung der Drohnen-Förderbänder 2 verlaufen und oberhalb der Drohnen-Förderbänder 2 in einer Richtung quer zur Laufrichtung der Drohnen-Förderbänder 2 aufeinander zu bewegt werden können, so dass sie die auf der Landefläche stehende Drohne 6 verschieben können. Die Bestückungseinheit 5 umfasst eine zwischen den Drohnen-Förderbändern 2 angeordneten Hubvorrichtung 7 für ein quaderförmiges Transportgut 4. Die die auf der Landefläche stehende Drohne 6 ist durch Bewegung der Drohnen-Förderbänder 2 und/oder Bewegung der Schiebeleisten 3 in eine Position bewegt worden, in der die Drohne 6 das auf der Hubvorrichtung angeordnete Transportgut 4 aufnehmen kann (Beladeposition). Die Bestückungseinheit 5 umfasst auch ein Förderband 8 zur Bewegung des Transportguts 4 auf die Hubvorrichtung 7 (Transportgut-Förderband 8). Die Schiebeleisten 3 können die Drohne 6 so verschieben, dass die Drohne 6 gleichzeitig mit beiden Drohnen-Förderbändern 2 Kontakt hat. Die Drohne 6 umfasst ein Landegestell mit Kufen, die durch die Schiebeleisten 3 in eine Position parallel zu der Laufrichtung der Drohnen-Förderbänder 2 bewegt werden können. Das Landegestellt der Drohne 6 ist bei der Bewegung in die Beladeposition an einer Anschlagskante ausgerichtet worden.

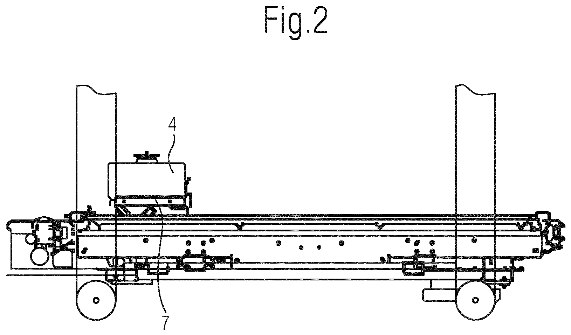

Figur 2 zeigt insbesondere eine zur Bestückungseinheit 5 gehörende Hubvorrichtung 7, die als Scherenhubtisch ausgebildet ist. Auf der Hubvorrichtung befindet sich das Transportgut 4.

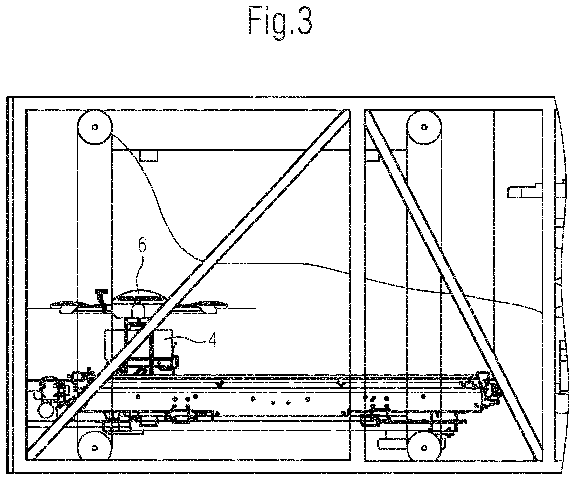

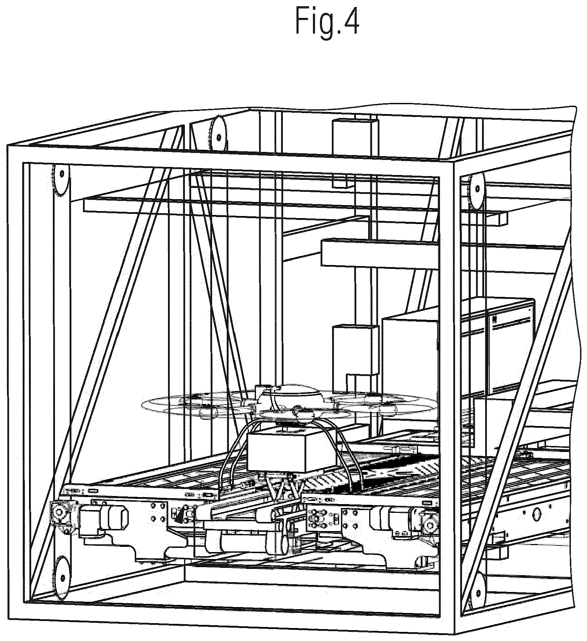

Die Figuren 3 und 4 zeigen ebenfalls insbesondere die zur Bestückungseinheit 5 gehörende Hubvorrichtung 7, die als Scherenhubtisch ausgebildet ist. Auf der Hubvorrichtung befindet sich das Transportgut 4, so dass es von der Drohne 6 ergriffen werden kann.

## Patentansprüche

1. Landeplattform (1) für eine Drohne (6) umfassend eine Landefläche umfassend zwei in derselben horizontalen Ebene parallel angeordnete Drohnen-Förderbänder (2), die so beabstandet sind, dass eine auf der Landefläche stehende Drohne (6) gleichzeitig mit beiden Drohnen-Förderbändern (2) Kontakt haben kann, zwei Schiebeleisten (3), die jeweils zumindest teilweise parallel zur Laufrichtung der Drohnen-Förderbänder (2) verlaufen und oberhalb der Drohnen-Förderbänder in einer Richtung quer zur Laufrichtung der Drohnen-Förderbänder aufeinander zu bewegt werden können, so dass sie eine auf der Landefläche stehende Drohne (6) verschieben können, und eine Bestückungseinheit (5) umfassend eine zwischen den Drohnen-Förderbändern angeordneten Hubvorrichtung (7) für Transportgut (4), wobei die auf der Landefläche stehende Drohne durch Bewegung der Drohnen-Förderbänder (2) und/oder Bewegung der Schiebeleisten (3) in eine Beladeposition bewegt werden kann, in der die Drohne (6) auf der Hubvorrichtung (7) angeordnetes Transportgut (4) aufnehmen kann, wobei die Hubvorrichtung (7) als Scherenhubtisch ausgeführt ist, wobei der Scherenhubtisch über einen selbsthemmenden Spindelantrieb in der Höhe verstellt werden kann.

2. Landeplattform nach Anspruch 1, **dadurch gekennzeichnet, dass** die Bestückungseinheit (5) ein Transportgut-Förderband (8) zur Bewegung des Transportguts (4) auf die Hubvorrichtung (7) umfasst.

3. Landeplattform nach einem der vorhergehenden Ansprüche, **dadurch gekennzeichnet, dass** die Drohnen-Förderbänder (2) als Modulförderbänder ausgebildet sind.

4. Landeplattform nach Anspruch 3, **dadurch gekennzeichnet, dass** die Einzelelemente der Modulförderbänder (2) zumindest teilweise offen sind, so dass Feuchtigkeit ablaufen kann.

5. Landeplattform nach einem der vorhergehenden Ansprüche, **dadurch gekennzeichnet, dass** die Landefläche, die Schiebeleisten (3) und die Bestückungseinheit (5) an einem Rahmengestell angebracht sind.

6. Landeplattform nach einem der vorhergehenden Ansprüche, **dadurch gekennzeichnet, dass** die Schiebeleisten (3) eine Drohne (6) so verschieben können, dass die Drohne gleichzeitig mit beiden Drohnen-Förderbändern (2) Kontakt hat.

7. Landeplattform nach einem der vorhergehenden Ansprüche, **dadurch gekennzeichnet, dass** von einem Landgestell der Drohne umfasste Kufen durch die Schiebeleisten (3) in eine Position parallel zu der Laufrichtung der Drohnen-Förderbänder (2) bewegt werden können.

8. Landeplattform nach einem der vorhergehenden Ansprüche, **dadurch gekennzeichnet, dass** die Schiebeleisten (3) über einen Kettentrieb angetrieben werden.

9. Landeplattform nach einem der vorhergehenden Ansprüche, **dadurch gekennzeichnet, dass** die Schiebeleisten (3) aus profiliertem Edelstahl sind.

10. Landeplattform nach einem der vorhergehenden Ansprüche, **dadurch gekennzeichnet, dass** die Schiebeleisten (3), wenn sie sich voneinander weg bewegen, auf der Landefläche befindliche Fremdteile wie beispielsweise kleine Äste oder Laub nach außen von der Landefläche herunter schieben können.

11. Landeplattform nach einem der vorhergehenden Ansprüche, **dadurch gekennzeichnet, dass** bei der Bewegung der Drohne (6) in die Beladeposition ein Landegestell der Drohne an einer Anschlagskante ausgerichtet wird.

12. Landeplattform nach einem der vorhergehenden Ansprüche, **dadurch gekennzeichnet, dass** bei der Bewegung der Drohne (6) in die Beladeposition Kufen eines Landegestells der Drohne unter zwei Niederhaltelaschen bewegt werden.

13. Landeplattform nach einem der vorhergehenden Ansprüche, **dadurch gekennzeichnet, dass** Niederhaltelaschen ein Landegestell der Drohne (6) halten während die Drohne auf der Hubvorrichtung (7) angeordnetes Transportgut (4) aufnimmt.

14. Landeplattform nach einem der vorhergehenden Ansprüche, **dadurch gekennzeichnet, dass** die Landefläche mindestens 1,8 m mal 1,8 m groß ist.

15. Landeplattform nach einem der vorhergehenden Ansprüche, **dadurch gekennzeichnet, dass** die Landeplattform von der Drohne (6) gesteuert wird.

## Claims

1. Landing platform (1) for a drone (6), comprising a landing surface comprising two drone conveyor belts (2) arranged parallel to one another in the same horizontal plane and spaced apart such that a drone (6) standing on the landing surface can be in contact with both drone conveyor belts (2) at the same time, two sliding bars (3), each of which extends at least partially parallel to the running direction of the drone conveyor belts (2) and can be moved towards the other above the drone conveyor belts in a direction transverse to the running direction of the drone conveyor belts, such that they can displace a drone (6) standing on the landing surface, and a loading unit (5) comprising a lifting device (7) for cargo (4), arranged between the drone conveyor belts, wherein the drone standing on the landing surface can be moved into a loading position by movement of the drone conveyor belts (2) and/or movement of the sliding bars (3), in which loading position the drone (6) can receive cargo (4) arranged on the lifting device (7), wherein the lifting device (7) is designed as a scissor lift table, wherein the height of the scissor lift table can be adjusted by means of a self-locking spindle drive.

2. Landing platform according to claim 1, **characterised in that** the loading unit (5) comprises a cargo conveyor belt (8) for moving the cargo (4) onto the lifting device (7).

3. Landing platform according to any one of the preceding claims, **characterised in that** the drone conveyor belts (2) are designed as modular conveyor belts.

4. Landing platform according to claim 3, **characterised in that** the individual elements of the modular conveyor belts (2) are at least partially open, such that moisture can drain away.

5. Landing platform according to any one of the preceding claims, **characterised in that** the landing surface, the sliding bars (3) and the loading unit (5) are attached to a frame structure.

6. Landing platform according to any one of the preceding claims, **characterised in that** the sliding bars (3) can displace a drone (6) such that the drone is in contact with both drone conveyor belts (2) at the same time.

7. Landing platform according to any one of the preceding claims, **characterised in that** skids comprised by a landing gear of the drone can be moved by the sliding bars (3) into a position parallel to the running direction of the drone conveyor belts (2).

8. Landing platform according to any one of the preceding claims, **characterised in that** the sliding bars (3) are driven by a chain drive.

9. Landing platform according to any one of the preceding claims, **characterised in that** the sliding bars (3) are made of profiled stainless steel.

10. Landing platform according to any one of the preceding claims, **characterised in that**, when the sliding bars (3) move away from one another, they can push foreign objects located on the landing surface, such as small branches or leaves, outwards and off the landing surface.

11. Landing platform according to any one of the preceding claims, **characterised in that**, when the drone (6) is moved into the loading position, the landing gear of the drone is aligned against a stop edge.

12. Landing platform according to any one of the preceding claims, **characterised in that**, when the drone (6) is moved into the loading position, the skids of the drone's landing gear are moved under two hold-down tabs.

13. Landing platform according to any one of the preceding claims, **characterised in that** hold-down tabs hold the landing gear of the drone (6) while the drone receives cargo (4) arranged on the lifting device (7).

14. Landing platform according to any one of the preceding claims, **characterised in that** the landing surface is at least 1.8 m by 1.8 m in size.

15. Landing platform according to any one of the preceding claims, **characterised in that** the landing platform is controlled by the drone (6).

## Revendications

1. Aire d'atterrissage (1) pour un drone (6) composée d'une piste d'atterrissage avec deux bandes transporteuses pour drones (2) disposées parallèlement dans un même plan horizontal et qui sont espacées de telle sorte qu'un drone (6) se trouvant sur la piste d'atterrissage puisse être en contact simultanément avec les deux bandes transporteuses pour drones (2), de deux glissières (3) qui sont disposées chacune au moins en partie parallèlement au sens de déplacement des bandes transporteuses pour drones (2) et qui peuvent être déplacées l'une vers l'autre au-dessus des bandes transporteuses, dans une direction transversale par rapport au sens de déplacement de celles-ci, de manière à pouvoir déplacer un drone (6) posé sur la piste d'atterrissage, et d'une unité de chargement (5) comprenant un dispositif de levage (7) pour les marchandises transportées (4) placé entre les bandes transporteuses pour drones ; le drone se trouvant sur la piste d'atterrissage pouvant être amené par le mouvement des bandes transporteuses pour drones (2) et/ou celui des glissières (3), dans une position de chargement dans laquelle le drone (6) peut recevoir la marchandise (4) posée sur le dispositif de levage (7) ; le dispositif de levage (7) étant conçu comme une table élévatrice à ciseaux qui peut être réglée en hauteur grâce à un entraînement à vis sans fin autobloquant.

2. Aire d'atterrissage selon la revendication 1, **caractérisée par le fait que** l'unité de chargement (5) comprend un convoyeur à bande (8) destiné à acheminer la marchandise (4) vers le dispositif de levage (7).

3. Aire d'atterrissage selon l'une des quelconque revendications précédentes, **caractérisée par le fait que** les bandes transporteuses pour drones (2) sont conçues comme des convoyeurs à bande modulaires.

4. Aire d'atterrissage selon la revendication 3, **caractérisée par le fait que** chacun des éléments des convoyeurs à bande modulaires (2) est au moins partiellement ouvert, de manière à permettre l'évacuation de l'humidité.

5. Aire d'atterrissage selon l'une des quelconque revendications précédentes, **caractérisée par le fait que** la piste d'atterrissage, les glissières (3) et l'unité de chargement (5) sont montées sur un châssis.

6. Aire d'atterrissage selon l'une des quelconque revendications précédentes, **caractérisée par le fait que** les glissières (3) peuvent déplacer un drone (6) de manière à ce qu'il soit simultanément en contact avec les deux bandes transporteuses pour drones (2).

7. Aire d'atterrissage selon l'une des quelconque revendications précédentes, **caractérisée par le fait que** les patins intégrés dans un train d'atterrissage du drone peuvent être déplacés à l'aide des glissières (3) dans une position parallèle au sens de défilement des bandes transporteuses pour drones (2).

8. Aire d'atterrissage selon l'une des quelconque revendications précédentes, **caractérisée par le fait que** les glissières (3) sont entraînées à l'aide d'un entraînement par chaîne.

9. Aire d'atterrissage selon l'une des quelconque revendications précédentes, **caractérisée par le fait que** les glissières (3) sont en acier inoxydable profilé.

10. Aire d'atterrissage selon l'une des quelconque revendications précédentes, **caractérisée par le fait que** les glissières (3), lorsqu'elles s'écartent les unes des autres, peuvent repousser vers l'extérieur de la piste d'atterrissage les corps étrangers qui s'y trouvent, comme les petites branches ou le feuillage.

11. Aire d'atterrissage selon l'une des quelconque revendications précédentes, **caractérisée par le fait que**, lors du déplacement du drone (6) vers la position de chargement, un train d'atterrissage du drone est aligné sur un bord d'arrêt.

12. Aire d'atterrissage selon l'une des quelconque revendications précédentes, **caractérisée par le fait que**, lors du déplacement du drone (6) vers la position de chargement, les patins d'un train d'atterrissage du drone passent sous deux agrafes de maintien.

13. Aire d'atterrissage selon l'une des quelconque revendications précédentes, **caractérisée par le fait que** des agrafes de maintien retiennent un train d'atterrissage du drone (6) pendant qu'il charge une marchandise (4) placée sur le dispositif de levage (7).

14. Aire d'atterrissage selon l'une des quelconque revendications précédentes, **caractérisée par le fait que** la piste d'atterrissage mesure au moins 1,8 m sur 1,8 m.

15. Aire d'atterrissage selon l'une des quelconque revendications précédentes, **caractérisée par le fait qu'**elle est commandée par le drone (6).
